# EUROPÄISCHE PATENTSCHRIFT

(11) **EP 4 020 107 B1**
(45) Veröffentlichungstag und Bekanntmachung des Hinweises auf die Patenterteilung: **29.11.2023**
(21) Anmeldenummer: 20217153.4
(22) Anmeldetag: 23.12.2020
(51) Int. Cl.: G05B 19/418, B67C 3/00

(54) **VERFAHREN ZUR ÜBERWACHUNG DER HERSTELLUNG VON MIT EINEM WÄSSRIGEN SYSTEM BEFÜLLTEN GEBINDEN MIT EINER PRODUKTIONSANLAGE, VERWENDUNG EINES VERFAHRENS ZUR ÜBERWACHUNG SOWIE PRODUKTIONSANLAGE**
METHOD FOR MONITORING THE PRODUCTION OF CONTAINERS FILLED WITH AN AQUEOUS SYSTEM WITH A PRODUCTION SYSTEM, USE OF A MONITORING METHOD AND PRODUCTION SYSTEM
PROCÉDÉ DE SURVEILLANCE DE LA FABRICATION DE CONTENEURS REMPLIS D'UN SYSTÈME AQUEUX DANS UNE INSTALLATION DE PRODUCTION, UTILISATION D'UN PROCÉDÉ DE SURVEILLANCE AINSI QU'INSTALLATION DE PRODUCTION

(43) Veröffentlichungstag der Anmeldung: 29.06.2022
(73) Patentinhaber: Red Bull GmbH, 5330 Fuschl am See (AT)
(72) Erfinder: CONCIN, Roland, 5330 Fuschl am See (AT); ÖCHSNER, Ralf, 5330 Fuschl am See (AT); PILLEI, Christian, 5330 Fuschl am See (AT); BREUSS, Arno, 5330 Fuschl am See (AT); LANG, Bernhard, 5330 Fuschl am See (AT); VONBRUEL, Patrick, 5330 Fuschl am See (AT)
(74) Vertreter: Metten, Karl-Heinz

(56) Entgegenhaltungen:
- EP-A1- 2 433 900
- DE-A1-102014 106 992
- DE-A1-102014 111 267
- DE-A1-102015 209 499
- DE-A1-102016 200 231
- DE-A1-102018 216 138
- DE-U1-202004 007 650

## Beschreibung

Die Erfindung betrifft ein Verfahren zur Überwachung der Herstellung von mit einem wässrigen System befüllten Gebinden auf Spezifikationskonformität auf einer auf Aggregaten basierenden Produktionsanlage. Dabei betrifft die Erfindung insbesondere die quasi-kontinuierliche Überwachung auf Spezifikationskonformität der Herstellung von mit einem wässrigen System befüllten Gebinden in einer High-Speed-Abfüllanlage. Ferner betrifft die Erfindung eine Verwendung eines Verfahrens zu Überwachung sowie eine Produktionsanlage.

Aktuelle Qualitätssicherungssysteme sind auf Grund nicht beliebig ausbaubarer Laborkapazitäten, der Vielzahl an zu berücksichtigenden Parametern, der immensen Produktionsgeschwindigkeiten der Anlagen und Maschinen und der komplexer werdenden Nachweise zur Absicherung der Produktqualität immer weniger in der Lage, mit Hilfe klassischer Stichprobenpläne zu jedem Zeitpunkt eines Produktentstehungsprozesses Daten über die Zusammensetzung des Produkts, der entsprechenden Primär- und Sekundärverpackungen und aller produktrelevanten Kennzeichnungen vorlegen und gegenüber Dritten nachweisen zu können. Selbst mit dynamisierten Stichprobenplänen stößt man hier an Grenzen. Eine lückenlose Kontrolle ist mit Hilfe derartiger Stichproben regelmäßig nicht möglich. Dies kann mitunter zu einer Einschränkung der Produktkonformität und zu einem unnötigen Ausschuss an Material während der Qualitätskontrolle führen.

DE 10 2016 200 231 A1 beschreibt ein Verfahren zum Übertragen von Daten einer Behälterbehandlungsanlage an ein Endgerät.

Gleichzeitig erfordern auch das Konsumverhalten und die individuellen Wünsche der Konsumenten nach Produktinformation eine verbesserte Kommunikation zwischen dem Produzenten und dem Konsumenten. Auf Grund der allumfassenden Verfügbarkeit diverser Social Media Kanäle gewinnen eine sichere, eindeutige, konsistente und insbesondere schnelle Kommunikation zum Kunden weiterhin an Bedeutung. Die Echtzeit-Verfügbarkeit der zugrunde liegenden Daten ist daher wünschenswert, um erfolgreich auf dem Weltmarkt agieren zu können.

Es ist daher eine Aufgabe der Erfindung, ein Verfahren mit einer verbesserten Qualitätssicherung für eine Produktionsanlage zur Befüllung von Gebinden mit einem wässrigen System bereitzustellen.

Die Aufgabe wird gelöst durch ein Computer-implementiertes Verfahren zur quasi-kontinuierlichen Überwachung der Herstellung einer Vielzahl an mit einem wässrigen System, insbesondere Getränk, befüllten Gebindegrundkörpern, insbesondere Getränkegebinden, auf einer auf Aggregaten basierenden High-Speed-Produktionsanlage entlang eines Produktionsverlaufs auf Spezifikationskonformität, wobei das Verfahren die Schritte umfasst: Empfangen von Zustandsinformationen an einer Netzwerk-Bridge von einer Vielzahl an Zustandserfassungseinheiten, die jeweils entlang des Produktionsverlaufs angeordnet sind, jeweils ausgelegt und eingerichtet zur intervallweisen Online-Erfassung von den Zustandsinformationen, insbesondere betreffend die Aggregate, das wässrige System, insbesondere die wässrige Getränkemischung, und/oder die das wässrige System, insbesondere die wässrige Getränkemischung, in der Mischvorrichtung bildenden Komponenten, bevorzugt unter Zuhilfenahme eines Netzwerkprotokolls und besonders bevorzugt unter Zuhilfenahme eines MQTT-Netzwerkprotokolls, Normalisierung der empfangenen Zustandsinformationen, insbesondere auf ein homogenes Format, auf der Netzwerk-Bridge, Abgleich, insbesondere fortwährender Abgleich, der Zustandsinformationen auf der Netzwerk-Bridge mit, insbesondere auf der Netzwerk-Bridge hinterlegten, spezifikationskonformen Soll-Bereichswerten und/oder Soll-Vorgaben und Zurverfügungstellung, insbesondere Übermittlung, einer Warn-Nachricht, insbesondere einer Spike-Nachricht via einem Spike-Router, an eine Empfängereinheit, wenn eine Zustandsinformation oder mehrere Zustandsinformationen außerhalb der Soll-Bereichswerte und/oder Soll-Vorgaben liegen, wobei die zu überwachende High-Speed-Produktionsanlage im Bereich von 10 bis 50 Gebindegrundkörpern pro Sekunde mit dem wässrigen System befüllt, wobei in der Netzwerk-Bridge der von der Zustandserfassungseinheit zur Verfügung gestellten Zustandsinformation neben dem Zeitstempel auch Informationen betreffend das wässrige System, die verwendeten Gebindegrundkörper, die Gebindecodierung und/oder Verpackung zugeordnet werden.

Durch das erfindungsgemäße Computer-implementierte Verfahren kann eine lückenlose bzw. quasi- oder nahezu lückenlose, durchgängige und nachweisliche Qualitätskontrolle in Echtzeit einer High-Speed Produktionsanlage gewährleistet werden. Bei Feststellung von Abweichungen von Soll-Werten können sofortige Maßnahmen beispielsweise automatisiert oder durch Servicepersonen ergriffen werden. Dadurch wird die Produktkonformität erheblich verbessert und der Ausschuss während der Produktion verringert. Darüber hinaus können Daten zu Gebinden und darin enthaltenen wässrigen Systemen spezifisch und individuell erhoben und weiterverarbeitet werden, um erweiterte Analysen von qualitativen Merkmalen einer Produktion zu ermöglichen oder entsprechende Daten zu teilen und einem weiteren Publikum zugängig zu machen. Beispielsweise können Hersteller und Abnehmer, Zustandsinformationen zu bestimmten Chargen und/oder Gebinden und darin enthaltenen wässrigen Systemen abrufen und/oder weiterverarbeiten.

Ferner können qualitative Merkmale eines befüllten oder ungefüllten Gebindes in einer Frequenz gemessen werden, die einer kontinuierlichen oder quasi-kontinuierlichen Überwachung der Produktion in Echtzeit sehr nahekommt bzw. sogar entspricht und weit über Kontrollen hinausgehen, die mit einer herkömmlichen Qualitätssicherung und Qualitätskontrolle mit bisherigen Anlagen möglich sind. Damit ist eine erhebliche Risikominimierung möglich. Nicht spezifikationskonforme Produkte können im Zuge der Produktion schneller und umfassender erkannt und für die Auslieferung gesperrt werden. Zusätzlich sind weiterführende Analysen möglich. Produkte mit verminderter Qualität können vor Auslieferung der spezifikationskonformen Produkte ausgesondert werden. Diese Überwachungen sind durch Zuordnung der Vorgabewerte zu einzelnen oder mehreren befüllten oder unbefüllten Gebindegrundkörper batchbezogen möglich. Hierdurch können sogar unterschiedliche Produkte, die zeitgleich sequentiell auf der Anlage produziert werden, gegen Vorgabewerte, welche ein erforderliches Maß einer Qualität vorgeben, geprüft werden können.

Eine Netzwerk-Bridge verbindet Netzwerke miteinander, wobei verbundene Netzwerksegmente jeweils eigene Kollisionsdomänen bilden. Eine Netzwerk-Bridge kann dabei im Allgemeinen auch Netzsegmente über längere Strecken und unterschiedliche Übertragungsmedien miteinander koppeln. Eine Netzwerk-Bridge kann dabei sowohl ein separates Bauteil darstellen und dabei vorteilhafterweise dezentral eingesetzt werden, als auch in einer übergeordneten Einheit, z.B. einem Server, implementiert sein.

Bei dem bei dem erfindungsgemäßen Verfahren in einer bevorzugten Ausführungsform zum Einsatz kommenden MQTT-Protokoll bzw. MQTT-Netzwerkprotokoll handelt es sich in einer besonders zweckmäßigen Ausgestaltung um ein Layer 5-7 Protokoll, d.h. ein Protokoll für die Schicht/Layer 5 (Sitzungsschicht (Session Layer)), Schicht/Layer 6 (Darstellungsschicht (Presentation Layer)) und/oder, insbesondere und, Schicht/Layer 7 (Anwendungsschicht (Application Layer)) gemäß dem OSI-Referenzmodell (Open Systems Interconnection model), welches ein anerkanntes Referenzmodell für Netzwerkprotokolle als Schichtenarchitektur darstellt. Das erfindungsgemäß verwendete MQTT-Protokoll setzt damit bevorzugt auf die Schichten/Layer unterhalb der Schicht/Layer 5 auf.

Gemäß einer bevorzugten Ausführungsvariante umfasst die Produktionsanlage eine Mischvorrichtung, mindestens eine Zuleitung zu der Mischvorrichtung, eine Abfüllvorrichtung, eine Transferleitung für den Transfer eines wässrigen Systems, insbesondere einer wässrigen Getränkemischung, von der Mischvorrichtung zu der Abfüllvorrichtung, eine Verschlussvorrichtung, eine Vorrichtung, ausgelegt und eingerichtet zum Anliefern von den unbefüllten Gebindegrundkörpern, insbesondere unbefüllten Getränkegebindegrundkörpern, insbesondere von unbefüllten Getränkedosengrundkörpern, eine Vorrichtung, ausgelegt und eingerichtet zum Anliefern von Gebindeverschlüssen, insbesondere von Getränkedosendeckeln, und gegebenenfalls eine Pasteurisiereinheit und/oder eine Verpackungseinheit, sowie die ein oder mehreren Zustandserfassungseinheiten, insbesondere die Vielzahl an Zustandserfassungseinheiten.

Gemäß einer bevorzugten Ausführungsvariante umfasst das Computer-implementierte Verfahren ferner eine Zuordnung der Warn-Nachricht, insbesondere unter Verwendung eines Zeitpunkts der Erstellung dieser Warn-Nachricht, zu einer oder einer Abfolge an mit dem wässrigen System, insbesondere der wässrigen Getränkemischung, befüllten und gegebenenfalls verschlossenen Gebindegrundkörpern, insbesondere Getränkegebindegrundkörpern.

Ein Vorteil, dieser Ausführungsvariante besteht insbesondere auch darin, dass einzelne oder mehrere nicht den Vorgabewerten entsprechende Gebindegrundkörper individuell oder in einem Batch/Charge identifiziert werden können. Somit kann festgestellt werden, ob ein oder mehrere bestimmte Gebindegrundkörper mit einer Warn-Nachricht verknüpft sind und Vorgabewerte zur Qualitätssicherung nicht erfüllt werden. Dies erlaubt es, einzelne oder mehrere fehlerhafte Gebindegrundkörper aus der Produktion zu entfernen, wodurch der Ausschuss an unnötig entfernten Gebinden aus der Produktion reduziert wird oder gezielte Reaktionen wie beispielsweise eine Wartung der Produktionsanlage ermöglicht wird. Die Zuordnung kann insbesondere unter Verwendung eines Zeitpunkts der Erstellung einer Warn-Nachricht und/oder unter Verwendung eines Generierungs- oder Versendungszeitpunkts einer Zustandsinformation geschehen. Durch den Zeitpunkt der Erstellung der Warnnachricht oder der Generierung und Versendung einer Zustandsinformation wird angegeben, zu welchem Zeitpunkt während der Produktion die Warn-Nachricht erzeugt wurde, dadurch kann die Warn-Nachricht einem bestimmten Gebindegrundkörper oder zumindest einer überschaubaren Anzahl an Gebinden oder einer Charge/Batch zugeordnet werden.

Gemäß einer weiteren bevorzugten Ausführungsvariante ist das Computer-implementierte Verfahren dadurch gekennzeichnet, dass die zu überwachende High-Speed-Produktionsanlage im Bereich von 20 bis 40 Gebindegrundkörpern, bevorzugt Getränkedosengrundkörper, pro Sekunde mit dem wässrigen System, insbesondere der wässrigen Getränkemischung, befüllt.

Derartige Highspeed Produktionsanlagen können ausreichende Produktionsvolumina liefern. Die verarbeitete Anzahl an Gebindegrundkörpern beträgt mehrere Gebindegrundkörper pro Sekunde. Dies bedingt eine (quasi) kontinuierliche Echtzeitüberwachung der Gebindegrundkörper und stellt erhöhte Anforderungen an die Zuordnung einer Warnnachricht zu einzelnen Gebinden.

Gemäß einer weiteren bevorzugten Ausführungsvariante ist das Computer-implementierte Verfahren dadurch gekennzeichnet, dass in Intervallen, die sich über einen Zeitraum von 1 sec bis 120 sec, insbesondere von 5 sec bis 30 sec, erstrecken, die von den Zustandserfassungseinheiten erfassten Zustandsinformationen der zugewiesenen Netzwerk-Bridge zur Verfügung gestellt, insbesondere an die zugewiesene Netzwerk-Bridge übermittelt werden.

Das Übermitteln der Zustandsinformationen an die Netzwerk-Bridge in den genannten Zeiträumen von 1 bis 120 sec und besonders im Intervall von 5 bis 30 sec resultiert in einer (quasi) Kontinuität des Erfassens der Zustandsinformationen und aufbauend darauf einer Warn-Nachricht. Somit besteht ein Vorteil dieser Ausführungsvariante darin, dass eine (quasi) Kontinuität der Überwachung von Zustandsinformationen der Gebinde und /oder Chargen/Batches ermöglicht wird. Dadurch werden Produktionsrisiken abgesenkt und der Ausschuss noch weitergehend reduziert.

Gemäß einer weiteren bevorzugten Ausführungsvariante ist das Computer-implementierte Verfahren dadurch gekennzeichnet, dass, sobald eine Warn-Nachricht erfolgt, dass ein Soll-Bereichswert und/oder eine Soll-Vorgabe nicht eingehalten wird, ein Instandhaltungsauftrag generiert wird.

Ein Vorteil dieser Ausführungsvariante besteht darin, dass durch den Instandhaltungsauftrag beispielsweise Personal oder eine automatisierte Vorrichtung benachrichtigt werden können, dass eine Warnnachricht vorliegt und ein Soll-Bereichswert und/oder eine Soll-Vorgabe für ein oder mehrere Gebindegrundkörper oder ein Batch nicht eingehalten worden ist. Dieses Gebinde bzw. eine Abfolge der Gebinde in einem entsprechenden Zeitintervall kann somit entweder durch Servicepersonal oder die automatisierte Vorrichtung aus der Produktion entfernt werden. Ferner kann durch den Instandhaltungsauftrag angegeben werden, dass ein Funktionsausfall einer Vorrichtung, wie beispielsweise der Mischvorrichtung oder Ähnliches vorliegt und eine entsprechende Überprüfung oder Wartung der entsprechenden Vorrichtung erforderlich ist. Dazu kann der Instandhaltungsauftrag von der Netzwerk-Bridge an einen diensthabenden Verantwortlichen, die Werksleitung oder in ein Labor geroutet werden oder an ein sonstiges Empfängergerät. Dadurch können eventuelle Fehlerquellen sehr zeitnah wieder Instand gesetzt werden.

Gemäß einer weiteren bevorzugten Ausführungsvariante ist das Computer-implementierte Verfahren dadurch gekennzeichnet, dass einer oder einer Abfolge an mit dem wässrigen System, insbesondere der wässrigen Getränkemischung, befüllten und gegebenenfalls verschlossenen Gebindegrundkörpern, insbesondere Getränkegebindegrundkörpern, vor oder nach der Verpackungseinheit ein Freigabemodus zugewiesen wird, wenn diesem oder diesen keine Warn-Nachricht zugewiesen wurde.

Diese Ausführungsvariante bietet den Vorteil, dass eine verbesserte Qualitätskontrolle erreicht wird. Wenn keine Warn-Nachricht erstellt wird und ein oder mehrere Gebindegrundkörper explizit freigegeben werden, ist sichergestellt, dass die ein oder mehreren Gebindegrundkörper und das eventuell darin enthaltene wässrige System innerhalb der Vorgabewerte (Soll-Bereichswert und/oder eine Soll-Vorgabe) liegt.

Gemäß einer weiteren bevorzugten Ausführungsvariante ist das erfindungsgemäße Computer-implementierte Verfahren dadurch gekennzeichnet, dass, sobald eine Warn-Nachricht erfolgt, dass ein Soll-Bereichswert und/oder eine Soll-Vorgabe nicht eingehalten wird, der oder die dieser Warn-Nachricht zugeordnete(n) mit dem wässrigen Systems, insbesondere der wässrigen Getränkemischung, befüllte(n) und gegebenenfalls verschlossene(n) Gebindegrundkörper, insbesondere Getränkegebindegrundkörper, während oder nach der Produktion dem Produktionsprozess entzogen werden.

Die Ausführungsvariante bietet den Vorteil, dass durch das Entziehen eines oder mehrerer nicht die Vorgabewerte entsprechenden Gebindegrundkörpern eine ausreichende Qualitätskontrolle gewährleistet wird, sodass fehlerhafte Gebinde nicht ausgegeben werden und nicht an den Endverbrauer gelangen. Ferner können die entzogenen Gebindegrundkörper analysiert und auf mögliche Fehlerquellen untersucht werden.

Gemäß einer weiteren bevorzugten Ausführungsvariante ist das erfindungsgemäße Computer-implementierte Verfahren dadurch gekennzeichnet, dass die Normalisierung der, empfangenen Zustandsinformationen auf der Netzwerk-Bridge eine Zuweisung eines Zeitstempels zu einer oder mehrerer Zustandsinformationen und eine Zuweisung der ein oder mehreren Zustandsinformationen zu einer oder mehreren Zustandserfassungseinheiten, die jeweils die ein oder mehreren Zustandsinformationen generiert haben, umfasst.

Diese Ausführungsvariante bietet den Vorteil, dass Zustandsinformationen also solche mit einer Zeitkomponente und der Zustandserfassungseinheit(en), welche die Zustandsinformationen erfasst hat/haben, verknüpft werden. Somit kann beispielsweise eine Zeitinformation mit einer Ortsinformation verknüpftet werden und eine dazugehörige Zustandserfassungsinformation ein oder mehreren befüllten oder unbefüllten Gebindegrundköprern zugeordnet werden. Der Zeitstempel kann beispielsweise angeben, wann die Zustandsinformation erzeugt wurde und/oder wann die Zustandsinformation an die Netzwerk-Bridge übermittelt wurde und/oder wann die Zustandsinformation an der Netzwerk-Bridge eingegangen ist. Somit können Zustandsinformationen individuell mit ein oder mehreren Gebindegrundkörpern verknüpft werden.

Gemäß einer weiteren bevorzugten Ausführungsvariante ist das Computer-implementierte Verfahren dadurch gekennzeichnet, dass der Zeitstempel denjenigen Zeitpunkt wiedergibt, zu dem die jeweilige Zustandsinformation zu der Netzwerk-Bridge versandt wurde.

Diese Ausführungsvariante hat den Vorteil, dass dadurch eine oder mehrere Zustandsinformationen einem Zeitpunkt während der Produktion und jeweils der Zustandsinformationseinheit, welche eine entsprechende Zustandsinformation aufgenommen hat, zugeordnet werden können. Somit können ein oder mehrere Zustandsinformationen ein oder mehreren Gebindegrundkörpern zugeordnet werden. Hierbei kann unter der Prämisse vorgegangen werden, dass der Zeitpunkt des Versendens der ein oder mehreren Zustandsinformationen im Wesentlichen dem Zeitpunkt der Generierung oder der Messung der ein oder mehreren Zustandsinformationen entspricht.

Bevorzugt findet eine Zuordnung von Informationen betreffend das wässrigen System, insbesondere die wässrige Getränkemischung, die verwendeten Gebindegrundkörper, insbesondere Getränkegebindegrundkörper, die Gebindecodierung und die Verpackung statt.

Diese Ausführungsvariante bietet den Vorteil, dass Gebindegrundkörper und ein eventuell darin befindliches wässriges System mit den dazugehörigen Zustandsinformationen eindeutig identifizierbar sind, auch innerhalb einer Batch, Verpackung und/oder einer Charge an Gebindegrundkörpern. Dies ermöglicht es, fehlerhafte Gebindegrundkörper gezielt zu entfernen und/oder Fehlerquellen zu bestimmen oder Abweichungen zu kennzeichnen. Gemäß einer weiteren bevorzugten Ausführungsvariante ist das Computer-implementierte Verfahren dadurch gekennzeichnet, dass der Zeitpunkt der Erstellung der Warn-Nachricht abgeglichen wird mit einem Modus, in dem sich die Produktionsanlage befindet.

Ein Modus kann beispielsweise angeben, ob die Produktionsanlage angehalten wurde oder ob ein Fehler in einem Abschnitt vorlag oder ob die Produktionsanlage gewartet wurde. Ein Vorteil dieser Ausführungsvariante besteht darin, dass eine Warn-Nachricht einem Modus der Produktionsanlage zugeordnet werden kann. Somit kann erkannt werden, ob eine Warn-Nachricht auf das Nicht-Einhalten von Soll-Vorgaben oder Soll-Bereichswerten zurückzuführen ist oder ob ein Modus der Produktionsanlage für die Generation einer Warn-Nachricht verantwortlich ist.

Gemäß einer weiteren bevorzugten Ausführungsvariante ist das erfindungsgemäße Computer-implementierte Verfahren dadurch gekennzeichnet, dass eine Nachricht zur Überprüfung der Funktionsfähigkeit einer Zustandserfassungseinheit an die Empfänger-Einheit übermittelt wird, wenn mehrere von dieser Zustandserfassungseinheit übermitteilte aufeinanderfolgende Zustandsinformationen identisch sind oder wenn diese Zustandserfassungseinheit über einen vorgegebenen Zeitraum keine Zustandsinformationen zur Verfügung stellt, insbesondere Übermittelt, oder wenn eine weitere Zustandserfassungseinheit, die ausgelegt und eingerichtet ist, parallel die gleiche Funktion auszuüben wie die erstgenannte Zustandserfassungseinheit, von dieser, insbesondere über einen vorgegebenen Zeitraum, abweichende Zustandsinformationen liefert oder wenn die von dieser Zustandserfassungseinheit online ermittelten Zustandsinformationen von offline ermittelten Zustandsinformationen abweichen.

Diese Ausführungsvariante weist den Vorteil auf, dass die Funktionalität einzelner oder mehrerer Zustandserfassungseinheiten überprüft werden können. Somit können fehlerhafte Zustandserfassungseinheiten erfasst und behoben werden, wodurch die Qualitätskontrolle nochmals verbessert werden kann.

Gemäß einer weiteren bevorzugten Ausführungsvariante zeichnet sich das erfindungsgemäße Computer-implementierte Verfahren auch dadurch aus, dass die bei einer Netzwerk-Bridge eingegangenen Zustandsinformationen und auf dieser Netzwerk-Bridge mit weiteren Informationen angereicherten Zustandsinformationen an eine Speichereinheit weitergeleitet werden.

Ein Vorteil dieser bevorzugten Ausführungsvariante liegt darin, dass Daten in einem Speicher ausgelagert werden können. Dadurch kann die Sicherheit der abgelegten Daten erhöht werden. So kann eine gemeinsame Sicherheitsüberwachung angewendet werden. Ferner ist es möglich, dass externe Benutzer auf die Daten separat zugreifen können, wie beispielsweise einer Cloud. Darüber hinaus können gesammelte Daten weiterverarbeitet werden, beispielsweise zu statistischen Zwecken oder Vorhersagen.

Gemäß einer weiteren bevorzugten Ausführungsvariante ist das erfindungsgemäße Computer-implementierte Verfahren dadurch gekennzeichnet, die an die Speichereinheit weitergeleiteten, insbesondere normalisierten, Zustandsinformationen, welche auf der Speichereinheit gespeichert sind, auf der Netzwerk-Bridge gelöscht werden.

Ein Vorteil dieser Variante liegt darin, dass ein Datenvolumen auf der Netzwerk-Bridge nicht über einen gewissen Wert ansteigt. Dadurch wird eine Reduzierung der Rechenleistung des Systems vermieden. Ferner werden weniger Speicherkapazitäten verbraucht, wodurch günstigere Speicherkomponenten verbaut werden und die gesamten Kosten des Systems verringert werden können.

Gemäß einer weiteren bevorzugten Ausführungsvariante sieht das erfindungsgemäße Computer-implementierte Verfahren auch vor, dass die Zustandserfassungseinheit ausgewählt ist aus der Gruppe bestehend aus CO2-Sensoren, Temperatursensoren, Leitfähigkeitssensoren, pH-Sensoren, Drucksensoren, Brix-Sensoren, Refraktometern, Vorrichtungen zur Bestimmung der Durchflussrate, Wägeeinheiten, Füllstandshöhenbestimmungsvorrichtungen, insbesondere auf den Einsatz von Gamma- oder Röntgenstrahlen basierende Füllstandshöhenbestimmungsvorrichtungen, Videoüberwachungsvorrichtungen, insbesondere ausgestattet mit einer Bilderkennungs- und -auswerte-Software, Filtervorrichtungen, IR-Spektrometern, insbesondere NIR-Spektrometern, z.B. FT-NIR-Spektrometern, und Massenspektrometern, insbesondere Flugzeit (qTOF)-Massenspektrometer, z.B. ESI-qTOF-Massenspektrometer.

Gemäß einer weiteren bevorzugten Ausführungsvariante ist das erfindungsgemäße Computer-implementierte Verfahren dadurch gekennzeichnet, dass die Wägeeinheiten eine erste Wägeeinheit, ausgelegt und eingerichtet zur Bestimmung des Gewichts eines oder einer Vielzahl an unverschlossenen, keinen Gebindeverschluss aufweisenden befüllten Gebindegrundkörpern, insbesondere Getränkegebindegrundkörpern, insbesondere an befüllten Getränkedosengrundkörpern, stromabwärts zur Abfüllvorrichtung, und/oder eine zweite Wägeeinheit, ausgelegt und eingerichtet zur Bestimmung des Gewichts eines oder einer Vielzahl an mit dem Gebindeverschluss in der Verschlussvorrichtung verschlossenen befüllten Gebindegrundkörpern, bevorzugt Getränkegebindegrundkörpern, besonders bevorzugt an befüllten Getränkedosengrundkörpern, vorzugsweise nach Verlassen der Pasteurisiereinheit, und/oder eine dritte Wägeeinheit, ausgelegt und eingerichtet zur Bestimmung des Gewichts einer Vielzahl an verschlossenen befüllten Gebindegrundkörpern, insbesondere Getränkegebindegrundkörpern, stromabwärts zur Verpackungseinheit, umfasst.

Diese Ausführungsvariante hat den Vorteil, dass befüllte Gebindegrundkörper vor und nach dem Pasteurisieren gewogen werden können, um eventuelle Undichtigkeiten der Gebindegrundkörper zeitnah detektieren zu können.

Gemäß einer weiteren bevorzugten Ausführungsvariante ist das erfindungsgemäße Computer-implementierte Verfahren dadurch gekennzeichnet, dass Leitfähigkeitssensoren, insbesondere Temperatur- und Leitfähigkeitssensoren, in, an und/oder stromabwärts zu der Mischvorrichtung, mindestens eine Zuleitung zu der Mischvorrichtung, in, an und/oder stromaufwärts zu der der Abfüllvorrichtung und/oder in und/oder an der Transferleitung für den Transfer eines wässrigen Systems, insbesondere einer wässrigen Getränkemischung, von der Mischvorrichtung zu der Abfüllvorrichtung vorliegen.

Diese Ausführungsvariante weist unter anderem den Vorteil auf, dass mittels der Leitfähigkeitssensoren und der Temperatursensoren vor einer Abfüllung des wässrigen Systems die Qualität des wässrigen Systems auf Spezifikationskonformität überprüft werden kann.

Gemäß einer weiteren bevorzugten Ausführungsvariante ist das Computer-implementierte Verfahren dadurch gekennzeichnet, dass die für einen Gebindegrundkörper, insbesondere Getränkegebindegrundkörper, oder für eine Abfolge von Gebindegrundkörpern, insbesondere Getränkegebindegrundkörpern, und/oder für das wässrige System, insbesondere die wässrige Getränkemischung, eines Gebindegrundkörpers, insbesondere Getränkegebindegrundkörpers, oder einer Abfolge von Gebindegrundkörpern, insbesondere Getränkegebindegrundkörpern, im Produktionsverlauf erfassten Zustandsdaten der mit einer Codiereinheit auf den Gebindegrundkörpern, insbesondere Getränkegebindegrundkörpern, und/oder den zugehörigen Gebindeverschluss aufgetragenen Codierung zuordnet werden.

Ein Vorteil dieser Ausführungsvariante liegt darin, dass Zustandsinformationen, welche zu jeder Batch, Verpackung, Charge, wässrigem System und/oder jedem Gebindegrundkörper erfasst wurden, von einem Dritten abrufbar zugeordnet werden können. So können diese Informationen beispielsweise in einem QR-Code oder einem ähnlichen Auslesemechanismus abrufbar auf einer Verpackung von ein oder mehreren Gebindegrundkörpern oder einem Gebindegrundkörper selbst angebracht werden. Dadurch ist es Abnehmern möglich, die Zustandsinformationen und somit ein Maß der Qualität eines wässrigen Systems innerhalb eines Gebindegrundkörpers zu überprüfen.

Gemäß einer weiteren bevorzugten Ausführungsvariante ist das Computer-implementierte Verfahren dadurch gekennzeichnet, dass Zustandsinformationen, insbesondere betreffend die Aggregate und/oder das wässrige System, insbesondere die wässrige Getränkemischung, in der Mischvorrichtung bildenden Komponenten, die über andere als die Vielzahl an Zustandserfassungseinheiten, die jeweils entlang des Produktionsverlaufs angeordnet sind, erfasst wurden, den für ein wässriges System, insbesondere eine wässrige Getränkemischung, und/oder den hiermit befüllten Gebindegrundkörpern, insbesondere Getränkegebindegrundkörpern, mit der Vielzahl an Zustandserfassungseinheiten ermittelten und erfassten Zustandsinformationen, insbesondere auf der Netzwerk-Bridge, zugeordnet werden.

Ein Vorteil dieser Ausführungsvariante liegt darin, dass Zustandsinformationen einem wässrigen System, das in einem oder in mehreren Gebindekörpern abgefüllt ist, zugeordnet werden kann und somit eine Qualität eines wässrigen System innerhalb eines Gebindekörpers bestimmt und angegeben werden kann. Dadurch können entsprechende Schritte in Reaktion auf eine Qualitätsüberprüfung, wie beispielsweise ein Rückruf von Gebinden, eigeführt werden.

Gemäß einer weiteren bevorzugten Ausführungsvariante ist das erfindungsgemäße Computer-implementierte Verfahren auch dadurch gekennzeichnet, dass mindestens eine, insbesondere eine Vielzahl an Zustandserfassungseinheiten, die jeweils entlang des Produktionsverlaufs angeordnet sind, ausgelegt und eingerichtet dazu, bis zu 200 Zustandsinformationen pro Sekunde der zugehörigen Netzwerk-Bridge zur Verfügung zu stellen, insbesondere an die zugehörige Netzwerk-Bridge zu übermitteln.

Ein Vorteil dieser Ausführungsvariante liegt darin, dass festgestellt wurde, dass durch eine Zurverfügungstellung von bis zu 200 Zustandsinformationen pro Sekunde eine (quasi) kontinuierliche Überwachung ermöglicht und somit eine verbesserte High-Speed-Produktionsanlage realisiert wird.

Gemäß einer weiteren bevorzugten Ausführungsvariante ist das erfindungsgemäße Computer-implementierte Verfahren dadurch gekennzeichnet, dass die Netzwerk-Bridge eingerichtet und ausgelegt ist, in aufeinanderfolgenden Intervallen von 5 bis 60 Sekunden die erhaltenen Zustandsinformationen mit den Soll-Bereichswerten und/oder Soll-Vorgaben abzugleichen und gegebenenfalls eine Warn-Nachricht an die Empfängereinheit zu übermitteln oder eine Warn-Nachricht zur Verfügung zu stellen.

Ein Vorteil dieser bevorzugten Ausführungsvariante liegt darin, dass durch den Abgleich in aufeinanderfolgenden Intervallen von 5 bis 60 Sekunden eine (quasi) kontinuierliche Überwachung ermöglicht wird. Dadurch können mangelhafte Gebindegrundkörper und darin enthaltene wässrige Systeme innerhalb einer High-Speed-Produktionsanlage so bestimmt werden, dass ein Ausschuss bei Entziehen von mangelhaften Gebinden, welche entsprechende Sollwerte nicht erfüllen, auf ein verkraftbares Maß reduziert wird.

Gemäß einer weiteren bevorzugten Ausführungsvariante ist das Computer-implementierte Verfahren dadurch gekennzeichnet, dass die Netzwerk-Bridge eingerichtet und ausgelegt ist, die, insbesondere im Zusammenhang mit einer Abweichung von Zustandsinformationen von Soll-Bereichswerten und/oder Soll-Vorgaben generierte, Warn-Nachricht um Handlungsanweisungen an die Empfängereinheit zu ergänzen.

Eine Handlungsanweisung kann Anweisungen beinhalten, welche einer autorisierten Person Instruktionen liefern, um auf eine Warn-Nachricht zu reagieren. Beispielsweise können diese Anweisungen eine Anleitung zur Reaktion und Wiederherstellung von Vorgabewerten oder der Wartung der Optionsanlage umfassen. Somit bietet diese bevorzugte Ausführungsvariante den Vorteil, dass autorisiertes Personal angemessen auf einen Warnhinweis regieren kann.

Die Aufgabe der Erfindung ebenfalls wird gelöst durch ein Computerprogramm gemäß Anspruch 25.

Die Aufgabe der Erfindung wird ebenfalls gelöst durch ein computerlesbares Speichermedium gemäß Anspruch 26.

Gemäß einer weiteren bevorzugten Ausführungsvariante wird die Aufgabe der Erfindung ebenfalls gelöst durch Verwendung des erfindungsgemäße Verfahrens, insbesondere nach einem vorangegangenen Ausführungsvarianten, oder des Computerprogramms oder des computerlesbaren Speichermediums zur quasi-kontinuierlichen Überwachung der Herstellung einer Vielzahl an mit einem wässrigen System, insbesondere einem Getränk befüllten Gebinden, insbesondere Getränkegebinden, auf einer auf Aggregaten basierenden Produktionsanlage, insbesondere High-Speed-Produktionsanlage, entlang des Produktionsverlaufs auf Spezifikationskonformität.

Gemäß einer weiteren bevorzugten Ausführungsvariante ist die Verwendung des erfindungsgemäßen Computer-implementierte Verfahrens auch dadurch gekennzeichnet, dass mindestens zwei, insbesondere mindestens drei, unterschiedliche wässrige Systeme, insbesondere wässrige Getränkemischungen, gleichzeitig sequentiell auf der Produktionsanlage, insbesondere High-Speed-Produktionsanlage, verarbeitet werden.

Gemäß einer weiteren bevorzugten Ausführungsvariante ist die Verwendung des erfindungsgemäßen Computer-implementierte Verfahrens oder des Computerprogramms oder des computerlesbaren Mediums zur, insbesondere automatisierten, Freigabe und/oder Sperrung eines auf einer Produktionsanlage, insbesondere High-Speed-Produktionsanlage, mit einem wässrigen System, insbesondere einer wässrigen Getränkemischung, befüllten und verschlossenen Getränkedosengrundkörpers oder einer Abfolge von solchen Getränkedosengrundkörpern.

Gemäß einer weiteren bevorzugten Ausführungsvariante ist die Verwendung des erfindungsgemäßen Computer-implementierten Verfahrens oder der Computerprogramms oder des computerlesbaren Mediums zur Kontrolle der Funktionsfähigkeit einer Zustandserfassungseinheit zur Kontrolle der Funktionsfähigkeit einer Zustandserfassungseinheit.

Die Aufgabe der Erfindung wird ebenfalls gelöst durch eine Produktionsanlage umfassend eine Netzwerk-Bridge umfassend ein oder mehrere Prozessoren, die ausgelegt und eingerichtet sind, das zuvor beschriebene Verfahren und die dazugehörigen Ausführungsvarianten durchzuführen, die ein oder mehrerer Zustandserfassungseinheiten, die Netzwerk-Bridge in Kommunikationsverbindung mit den ein oder mehreren Zustandserfassungseinheit; und die Empfangseinheit in Kommunikationsverbindung mit der Netzwerk-Bridge.

Ebenfalls offenbart ist eine Netzwerk-Bridge, umfassend ein oder mehrere Prozessoren, welche dazu ausgelegt und eingerichtet sind, individuell oder kollektiv das zuvor beschriebene Verfahren und die dazugehörigen Ausführungsformen durchzuführen. Dabei ist die Netzwerk-Bridge vorzugsweise mit einem MQTT-Netzwerkprotokoll ausgestattet.

Bevorzugte Ausführungsvarianten der Erfindung werden beispielhaft anhand der beiliegenden Figuren erläutert. Es zeigen beispielhaft:
- Fig. 1: Eine Produktionsanlage gemäß einer beispielhaften Ausführungsvariante.
- Fig. 2: Eine schematische und beispielhafte Darstellung einer Verknüpfung von Netzwerckomponenten einer Produktionsanlage.
- Fig. 3: Ein Computer-implementiertes Verfahren gemäß einer Ausführungsvariante.

In den Figuren sind gleiche oder im Wesentlichen funktionsgleiche bzw. -ähnliche Elemente mit den gleichen Bezugszeichen bezeichnet.

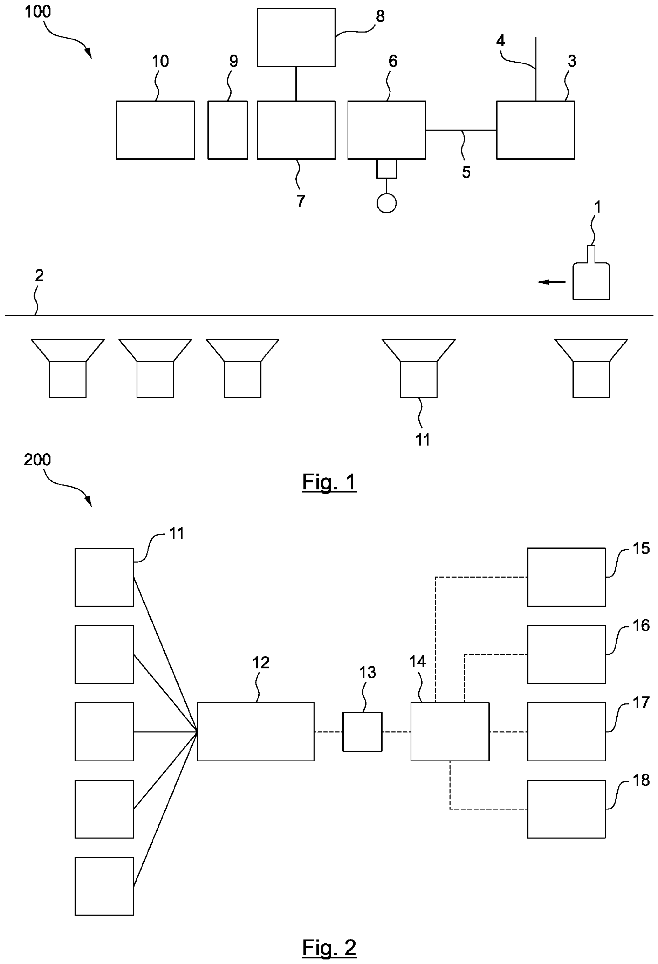

Figur 1 zeigt einen schematischen Aufbau einer Produktionsanlage, insbesondere einer Abfüllanlage oder einer High-Speed-Abfüllanlage. Die Produktionsanlage verfügt über einen Produktionsverlauf 2 wie beispielsweise ein Förderband, welches unbefüllte Gebindegrundkörper 1 entlang verschiedener Abschnitte der Produktionsanlage 100 führt. Die Produktionsanlage 100 ist dazu eingerichtet, in separaten Abschnitten verschiedenen Produktionsprozesse durchzuführen, sodass an einem Ende der Produktionseinheit ein mit einem wässrigen System befüllter und verschlossener Gebindegrundkörper 1 entweder einzeln oder mit mehreren anderen Gebindegrundkörpern 1 zusammen verpackt oder unverpackt ausgegeben wird.

Die Produktionsanlage 100 kann über eine Mischvorrichtung 3 mit mindestens einer Zuleitung 4 verfügen. Über die mindestens eine Zuleitung 4 können ein oder mehrere flüssige oder feste Komponenten der Mischvorrichtung 3 zugeführt werden. Innerhalb der Mischvorrichtung 3 werden die ein oder mehreren flüssigen oder festen Komponenten zu einem wässrigen System, insbesondere ein Getränk, vermengt.

Die Mischvorrichtung 3 steht über eine Transferleitung 5 mit einer Abfüllvorrichtung 6 in Fluidverbindung, um das wässrige System von der Mischvorrichtung 3 zu der Abfüllvorrichtung 6 zu befördern. Die Abfüllvorrichtung 6 ist dazu eingerichtet und ausgelegt, das wässrige System in einer vorgegebenen Menge in die unbefüllten Gebindegrundkörper 1 auszugeben, sodass die unbefüllten Gebindegrundkörper 1 mit dem wässrigen System bis zu einem bestimmten Level mit dem wässrigen System gefüllt sind.

Darüber hinaus kann die Produktionsanlage 100 eine Verschlussvorrichtung 7 umfassen, die dazu ausgelegt und eingerichtet ist, die mit einem wässrigen System befüllten Gebindegrundkörper 1 mit Verschlüssen zu verschließen. Dazu kann die Verschlussvorrichtung 7 außerdem eine Vorrichtung 8 zur Anlieferung von Verschlüssen umfassen, welche in Verbindung mit der Verschlussvorrichtung 7 steht.

Ferner kann die Produktionsanlage 100 eine Pasteurisierungsvorrichtung 9 umfassen. Die Pasteurisierungsvorrichtung 9 ist dazu ausgelegt und eingerichtet die mit einem wässrigen System befüllten Gebinde zu erhitzen beispielsweise bei 60°C oder mehr.

Die Produktionsvorrichtung kann ferner über einer Verpackungsvorrichtung 10 verfügen, welche dazu eingerichtet und ausgelegt ist einzelne oder mehrere mit einem wässrigen System befüllten Gebindegrundkörper 1 zu verpacken. Die Verpackung von einem oder mehreren befüllten Gebindegrundkörpern 1 oder ein Gebindegrundköper selbst können dabei mit einem lesbaren, insbesondere maschinell lesbaren Code versehen werden, in welchem Informationen (wie beispielsweise Zustandsinformationen) über einen Gebindegrundkörper 1, ein darin befindliches wässriges System und/oder einen Produktionsprozess codiert sind. Ein Beispiel für einen solchen Code kann ein QR Code oder NCF auslesbarer Chip oder Ähnliches sein.

Die Produktionsanlage kann in unterschiedliche Abschnitte unterteilt sein, in welchen verschiede Produktionsschritte durchgeführt werden. Beispielsweise kann in einem Abschnitt ein Produktionsprozess oder Produktionsschritt durchgeführt werden wie beispielhaft das oben genannte Abfüllen oder das Mischen eines wässrigen Systems.

Die Produktionsanlage kann über ein oder mehrere Zustandserfassungseinheiten 11 verfügen. Die Zustandserfassungseinheiten 11 können entlang des Produktionsverlaufs 2 angeordnet sein. Ferner, können einzelne Zustandserfassungseinheiten 11 den verschiedenen Abschnitten bzw. verschiedenen Produktionsprozessen zugeordnet werden. Beispielsweise können ein oder mehrere Zustandserfassungseinheiten 11 der Abfüllvorrichtung 6 bzw. dem Produktionsschritt des Abfüllens zugeordnet sein. Eine Zustandserfassungseinheit 11 kann ein Sensor sein, der dazu eingerichtet und ausgelegt ist, ein Merkmal eines befüllten oder unbefüllten Gebindegrundkörpers 1 sowie eines wässrigen Systems als solches oder innerhalb eines Gebindegrundkörpers 1 zu erfassen und/oder äußere Faktoren der Umgebung, wie Beispielsweise Druck, Temperatur, Luftfeuchtigkeit und/oder einen Zeitpunkt.

Die Zustandserfassungseinheiten 11 können dazu ausgelegt und eingerichtet sein, ein oder mehrere Zustandsinformationen zur Verfügung zu stellen, insbesondere an die Netzwerk-Bridge zu übermitteln.

Eine Zustandserfassungseinheit 11 kann ausgewählt sein aus einer Gruppe aus CO2-Sensoren (beispielsweise zur Bestimmung eines CO2 Gehalts), Temperatursensoren (beispielsweise zur Bestimmung einer Umgebungstemperatur, zur Bestimmung einer Temperatur des wässrigen Systems innerhalb, beispielsweise innerhalb der Mischvorrichtung 3, innerhalb oder während des Abfüllens, oder innerhalb eines Gebindegrundkörpers 1) Leitfähigkeitssensoren (beispielsweise um eine Leitfähigkeit, beispielsweise des wässrigen Systems, zu bestimmen), pH-Sensoren (beispielsweise um einen pH-Wert des wässrigen Systems zu bestimmen), Drucksensoren (beispielsweise um einen Umgebungsdruck oder einen Druck innerhalb von Leitungen oder Vorrichtung der Produktionsanlage oder einen Abfülldruck zu bestimmen), Brix-Sensoren, Refraktometern (beispielsweise einen Brechungsindex des wässrigen Systems innerhalb eines Gebindegrundkörpers oder außerhalb eines Gebinde Grundkörpers zu bestimmen), Vorrichtungen zur Bestimmung der Durchflussrate (beispielsweise um eine Durchflussrate insbesondere des wässrigen Systems durch Leitungen der Produktionsanlage zu bestimmen, Wägeeinheiten wie eine Waage, beispielsweise um ein Gewicht von ein oder mehreren Grundkörpern in befüllten und unbefüllten Zustand zu messen und zu vergleichen), Füllstandshöhenbestimmungsvorrichtungen, insbesondere auf den Einsatz von Gamma- oder Röntgenstrahlen basierende Füllstandshöhenbestimmungsvorrichtungen (um beispielsweise einen Fischstand des wässrigen Systems innerhalb der Gebindegrundkörper 1 zu bestimmen, beispielsweise mittels "durchleuchten" der Gebindegrundkörper 1 mittels Gamma oder Röntgenstrahlen), Videoüberwachungsvorrichtungen, insbesondere ausgestattet mit einer Bilderkennungs- und -auswerte-Software, Filtervorrichtungen, IR-Spektrometern, insbesondere NIR-Spektrometern, und Massenspektrometern, insbesondere Flugzeit (qTOF)-Massenspektrometer.

Die ein oder mehreren Zustandserfassungseinheiten 11 können dazu ausgelegt und eingerichtet sein beispielsweise alle 10 Sekunden einen Zustand bzw. Zustandsinformationen zu messen und die Zustandsinformation an die Netzwerk-Bridge 12 zu übermitteln.

Figur 2 zeigt eine schematische und beispielhafte Darstellung einer Verknüpfung von Netzwerkkomponenten einer Produktionsanlage.

Ein oder mehrere Zustandserfassungseinheiten 11 können in Kommunikationsverbindung mit einer Netzwerk-Bridge 12 stehen, um Daten wie beispielsweise Informationen erfasst von den Zustandserfassungseinheiten 11 an die Netzwerk-Bridge 12 zu übermitteln.

Die Übermittlung der Zustandsinformationen von den Zustandserfassungseinheiten 11 an die Netzwerk-Bridge 12 kann auf Basis verschiedener Arten erfolgen. Beispielsweise unter Verwendung des Netzwerk Protokolls MQTT (Message Queuing Telemetry Transport), auch MQTT-Netzwerkprotokoll genannt. In diesem Fall kann die Netzwerk-Bridge 12 beispielsweise ein MQTT Broker sein, welcher Informationen von ein oder mehreren externen Klienten empfängt. Eine weitere Art der Übermittlung kann über API (application programming interface) (Rest Call) erfolgen. Damit können der Netzwerk-Bridge 12 Sensorwerte über eine https post call Schnittstelle übermittelt werden und eine Integration für andere System zur Verfügung gestellt werden. Die Übermittlung der Zustandsinformationen kann beispielsweise in Echtzeit oder in vergleichsweise kurzen Zeitintervallen wie beispielsweise in Abständen von 10 Sekunden erfolgen.

Auf der Netzwerk-Bridge 12 können ein oder mehrere Zustandsinformationen angereichert werden. Beispielsweise kann ein Zeitstempel einer oder mehrerer sendenden Zustandserfassungseinheiten mit Zustandsinformationen ein oder mehrerer weiterer Zustandserfassungseinheit 11 verknüpft werden. Aufbauend darauf können ein oder mehrere Zustandsinformationen zu einem befüllten oder unbefüllten Gebindegrundkörper 1 oder einer Charge oder einer Verpackung mit ein oder mehreren befüllten oder unbefüllten Gebindegrundkörpern 1 verknüpft werden. Beispielsweise kann ein Messwert eines Sensors oder Messwerte von mehreren Sensoren mit einem Zeitstempel der messenden Sensoren versehen werden, der beispielweise den Zeitpunkt der Messung einer Information oder den Zeitpunkt der Absendung einer Information oder den Zeitpunkt des Empfangens an der Netzwerk-Bridge angibt, sowie einer Batch verknüpft werden.

Die Netzwerk-Bridge 12 kann ferner dazu eingerichtet und ausgelegt sein, Zustandsinformationen von ein oder mehreren Zustandserfassungseinheiten 11 mit vorgegebenen, Spezifikationen, Soll-Bereichswerten und/oder Soll-Vorgaben abzugleichen. Die Soll-Bereichswerte und die Soll-Vorgaben können beispielsweise bestimmte qualitative Voraussetzungen (wie beispielsweise Füllstände) angeben. Die Soll-Bereichswerte und die Soll-Vorgaben können beispielsweise auf einem internen Speicher auf der Netzwerk-Bridge 12 hinterlegt sein. Ferner können die Soll-Bereichswerte und die Soll-Vorgaben von einer externen Entität empfangen werden. Die Netzwerk-Bridge 12 kann über ein oder mehrere Prozessoren verfügen welche allein oder kollektiv dazu ausgelegt sind das Verfahren zu Überwachung durchzuführen. Ferner kann die Netzwerk-Bridge 12 ebenfalls über einen Speicher verfügen, um Soll-Bereichswerte oder Soll-Vorgabewerte zu speichern oder um Zustandsinformationen zu speichern.

Darüber hinaus kann die Netzwerk-Bridge 12 dazu eingerichtet und ausgelegt sein, eine Warn-Nachricht zu generieren, falls Zustandsinformationen insbesondere eines befüllten oder unbefüllten Gebindegrundkörpers 1 oder des wässrigen Systems nicht innerhalb eines Soll-Bereichswerts liegt und/oder falls eine Soll-Vorgabe nicht erfüllt wird. Ferner kann die Netzwerk-Bridge 12 dazu eingerichtet und ausgelegt sein eine Bestätigung-Nachricht zu erzeugen, falls eine Zustandsinformation insbesondere eines befüllten oder unbefüllten Gebindegrundkörpers 1 oder des wässrigen Systems als solches innerhalb eines Soll-Bereichswerts liegt und/oder falls eine Soll-Vorgabe erfüllt wird.

Ferner kann die Netzwerk-Bridge 12 dazu eingerichtet und ausgelegt sein, die Warn-Nachricht oder die Bestätigung-Nachricht beispielsweise mittels der angereicherten, insbesondere der verknüpften, Zustandsinformationen ein oder mehreren befüllten oder unbefüllten Gebindegrundkörpern zuzuordnen. Darüber hinaus können die Bestätigung-Nachricht und/oder die Warn-Nachricht einer Charge/Batch befüllter oder unbefüllten Grundkörpern zugeordnet werden. Eine Zuordnung der ein oder mehreren Zustandsinformationen zu ein oder mehreren Gebindegrundkörpern 1 kann beispielsweise über den Zeitpunkt der Erfassung (oder der Versendung) von ein oder mehreren Zustandsinformationen erfolgen. Dadurch können ein oder mehrere Zustandsinformationen, welche zu einem bestimmten Zeitpunkt durch ein oder mehrere bestimmte Zustandserfassungseinheiten 11 generiert (oder versandt) wurden, ein oder mehreren befüllten oder unbefüllten Gebindegrundkörpern 1 zugeordnet werden.

Die Netzwerk-Bridge 12 kann in Kommunikationsverbindung mit einer Empfängereinheit 14 stehen. In einer möglichen Variante, kann die Netzwerk-Bridge 12 über einen Spike-Router 13 in Kommunikationsverbindung mit der Empfängereinheit 14 stehen.

Die Netzwerk-Bridge 12 kann dazu ausgelegt und eingerichtet sein, die Zustandsinformationen als solche, die angereicherten (normalisierten) Zustandsinformationen und/oder die Warn-Nachricht oder gegebenenfalls die Bestätigungs-Nachricht an die Empfängereinheit 14 zu übermitteln. Beispielsweise kann die Netzwerk-Bridge 12 eine Spike-Nachricht über einen Spike-Router 13 an die Empfängereinheit 14 übermitteln. Die normalisieren Zustandsinformationen entsprechen angereicherten Zustandsinformationen oder verknüpften Zustandsinformationen.

Ein Beispiel für eine Empfängereinheit 14 kann beispielsweise ein Terminal 18 sein, welches autorisierte Personen über die Warn-Nachricht oder die Bestätigung-Nachricht informiert, beispielsweise in Form eines Signals über einen Bildschirm, eine Leuchte und/ oder eines Lautsprechers. Das Personal kann dann gegebenenfalls erforderliche Schritte als Antwort auf die Waren-Nachricht oder die Bestätigung-Nachricht durchführen. Beispielsweise können fehlerhafte Grundkörper oder fehlerhafte Chargen aussortiert werden oder die Anlage an den fehlerhaften Stellen gewartet werden. Ferner können entsprechende Zustandsinformationen gleichzeitig mit einer Warn-Nachricht oder eine Bestätigung-Nachricht angezeigt werden.

Ein weiteres Beispiel für eine Empfängereinheit 14 kann eine Vorrichtung sein, die dazu eingerichtet und ausgelegt ist, automatisiert gefüllte oder ungefüllte Gebindegrundkörper aus der Produktion zu entfernen (Entfernungsvorrichtung 16). Dadurch können nicht den Soll-Bereichswerten und oder Soll-Vorgabewerten ansprechenden Gebinden und oder wässrigen Systemen aus der Produktion automatisiert entfernt werden.

Darüber hinaus kann ein Beispiel für eine Empfängereinheit 14 eine Datenbank 16 sein. Beispielsweise können Zustandsinformationen als solche oder angereicherte Zustandsinformationen alleine und oder in Kombination mit einer Warn-Nachricht oder Bestätigung-Nachricht an die Datenbank von der Netzwerk-Bridge übermittelt werden. Im Zuge dessen, können entsprechende Informationen von den Sensoren, der Netzwerk-Bridge gelöscht werden, wenn die entsprechenden Daten auf der Datenbank gespeichert werden.

Ein weiteres Beispiel für eine Empfängereinheit 14 kann die Verpackungsvorrichtung 10 oder eine separate Codiervorrichtung 17 sein. Die Verpackungsvorrichtung 10 oder die Codiervorrichtung 17 kann beispielsweise dazu ausgelegt und eingerichtet sein, Zustandsinformationen als solche, die angereicherten Zustandsinformationen und/oder eine Warn-Nachricht/eine Bestätigungs-Nachricht in Form einer Codierung, beispielsweise eines QR-Code, auf die Verpackung von ein oder mehreren Gebindegrundkörpern oder auf die Gebindegrundkörper als solches aufzubringen.

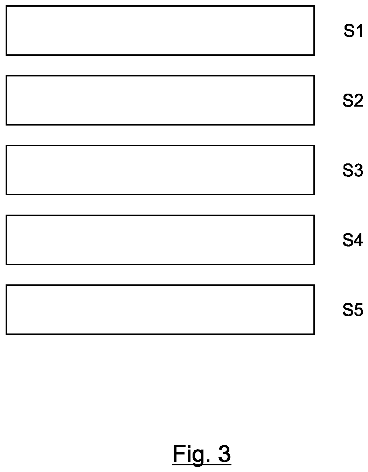

Fig. 3 zeigt beispielhaft ein Computer-implementiertes Verfahren gemäß einer Ausführungsvariante.

In einem Schritt S1 können Zustandsinformationen eines befüllten oder unbefüllten Grund Gebindes von ein oder mehreren Zustandserfassung ein erfasst werden. Die Zustandsinformationen können Echtzeit oder in vergleichsweise kurzen Intervallen von beispielsweise 10 Sekunden erfasst werden. Die Zustandsinformationen können ebenfalls mit einer Zeitinformation versehen sein.

In einem Schritt S2 können Zustandsinformationen von ein oder mehreren Zustandserfassungseinheiten 11 an eine Netzwerk-Bridge 12 weitergeleitet werden, beispielsweise unter Zuhilfenahme eines MQTT-Netzwerkprotokolls. In einer weiteren Variante können Zustandsinformationen direkt über die Netzwerk-Bridge 12 an eine externe Empfängereinheit 14 weitergeleitet werden.

In einem Schritt S3 können die übermittelten Zustandsinformationen auf der Netzwerk-Bridge 12 normalisiert, d. h. angereichert, werden. Beispielsweise können Zustandsinformationen mit einem Zeitstempel versehen werden und mit weiteren Zustandsinformationen verknüpft werden.

In einem Schritt S4 können die übermittelten Zustandsinformationen durch die Netzwerk-Bridge in bestimmten zeitlichen Abständen oder fortwährend abgeglichen werden um festzustellen, ob die Zustandsinformationen innerhalb von vorgegebenen Soll-Bereichswerten liegen oder vorgegebene Soll-Vorgaben erfüllen.

In einem weiteren Schritt S5 kann eine Warn-Nachricht auf Basis des Abgleichs gemäß Schritt S4 erstellt werden, welche angibt, dass ein bestimmter Soll-Bereichswert und/oder eine Soll-Vorgabe nicht eingehalten wurde. Darüber hinaus kann auf Basis des Abgleichs gemäß Schritt S4 eine Bestätigung nach erstellt werden, welche angibt, dass bestimmter Soll-Bereichswert und oder eine bestimmte Soll-Vorgabe eingehalten wurde.

In einem Schritt S6 kann die Warn-Nachricht und/oder die Bestätigung-Nachricht an eine Empfängereinheit 14 beispielsweise mittels eine Spike-Nachricht via eines Spike Routers 13 weitergeleitet werden, wenn eine Zustandsinformationen oder mehrere Zustandsinformationen außerhalb bzw. innerhalb der Soll-Bereichswerte und/oder der Soll-Vorgaben liegen.

### Bezugszeichen:

1-Gebindegrundkörper,
2-Produktionsverlauf,
3-Mischvorrichtung,
4-Zuleitung zur Mischvorrichtung,
5-Transferleitung,
6-Abfüllvorrichtung,
7-Verschlussvorrichtung,
8-Vorrichtung zum Anliefern von Verschlüssen,
9-Pasteurisierungsvorrichtung
10-Verpackungsvorrichtung,
11-Zustandserfassungseinheit,
12-Netzwerk-Bridge,
13-Spike Router,
14- Empfangseinheit,
15-Datenbank,
16-Entfernungsvorrichtung,
17-Codiervorrichtung,
iS-Terminal,
100-Produktionsanlage,
200-Verknüpfung von Netzwerkkomponenten

## Patentansprüche

1. Computer-implementiertes Verfahren zur quasi-kontinuierlichen Überwachung der Herstellung einer Vielzahl an mit einem wässrigen System befüllten Gebindegrundkörpern (1) auf einer auf Aggregaten basierenden High-Speed-Produktionsanlage (100) entlang eines Produktionsverlaufs (2) auf Spezifikationskonformität wobei das Verfahren die Schritte umfasst:
- Empfangen von Zustandsinformationen an einer Netzwerk-Bridge (12) von einer Vielzahl an Zustandserfassungseinheiten (11), die jeweils entlang des Produktionsverlaufs (2) angeordnet sind, jeweils ausgelegt und eingerichtet zur intervallweisen Online-Erfassung von den Zustandsinformationen,
- Normalisierung der empfangenen Zustandsinformationen auf der Netzwerk-Bridge (12),
- Abgleich der Zustandsinformationen auf der Netzwerk-Bridge (12) mit auf der Netzwerk-Bridge (12) hinterlegten spezifikationskonformen Soll-Bereichswerten und/oder Soll-Vorgaben und
- Zurverfügungstellung einer Warn-Nachricht an eine Empfangseinheit (14), wenn eine Zustandsinformation oder mehrere Zustandsinformationen außerhalb der Soll-Bereichswerte und/oder Soll-Vorgaben liegen,
wobei die zu überwachende High-Speed-Produktionsanlage (100) im Bereich von 10 bis 50 Gebindegrundkörpern (1) pro Sekunde mit dem wässrigen System befüllt wobei in der Netzwerk-Bridge (12) der von der Zustandserfassungseinheit (11) zur Verfügung gestellten Zustandsinformation neben dem Zeitstempel auch Informationen betreffend das wässrige System, die verwendeten Gebindegrundkörper (1), die Gebindecodierung und/oder Verpackung zugeordnet werden.

2. Verfahren nach Anspruch 1, wobei die Produktionsanlage (100) umfasst
eine Mischvorrichtung (3), mindestens eine Zuleitung zu der Mischvorrichtung (3),
eine Abfüllvorrichtung (6),
eine Transferleitung (5) für den Transfer eines wässrigen Systems von der Mischvorrichtung (3) zu der Abfüllvorrichtung (6),
eine Verschlussvorrichtung (7),
eine Vorrichtung, ausgelegt und eingerichtet zum Anliefern von den unbefüllten Gebindegrundkörpern (1),
eine Vorrichtung (8), ausgelegt und eingerichtet zum Anliefern von Gebindeverschlüssen, sowie die ein oder mehreren Zustandserfassungseinheiten (11).

3. Verfahren nach Ansprüchen 1 oder 2, ferner umfassend Zuordnung der Warn-Nachricht zu einer oder einer Abfolge an mit dem wässrigen System befüllten und gegebenenfalls verschlossenen Gebindegrundkörpern (1).

4. Verfahren nach Ansprüchen 1 bis 3, **dadurch gekennzeichnet, dass**
die zu überwachende High-Speed-Produktionsanlage (100) im Bereich von 20 bis 40 Gebindegrundkörper (1), bevorzugt Getränkedosengrundkörper, pro Sekunde mit dem wässrigen System befüllt.

5. Verfahren nach Ansprüchen 1 bis 4, **dadurch gekennzeichnet, dass**
in Intervallen, die sich über einen Zeitraum von 1 sec bis 120 sec erstrecken, die von den Zustandserfassungseinheiten (11) erfassten Zustandsinformationen der zugewiesenen Netzwerk-Bridge (12) zur Verfügung gestellt werden.

6. Verfahren nach einem der vorangehenden Ansprüche, **dadurch gekennzeichnet, dass**,
sobald eine Warn-Nachricht erfolgt, dass ein Soll-Bereichswert und/oder eine Soll-Vorgabe nicht eingehalten wird, ein Instandhaltungsauftrag generiert wird.

7. Verfahren nach einem der vorangehenden Ansprüche, **dadurch gekennzeichnet, dass**
einer oder einer Abfolge an mit dem wässrigen System befüllten und gegebenenfalls verschlossenen Gebindegrundkörpern (1), vor oder nach der Verpackungseinheit ein Freigabemodus zugewiesen wird, wenn diesem oder diesen keine Warn-Nachricht zugewiesen wurde.

8. Verfahren nach einem der vorangehenden Ansprüche, **dadurch gekennzeichnet, dass**,
sobald eine Warn-Nachricht erfolgt, dass ein Soll-Bereichswert und/oder eine Soll-Vorgabe nicht eingehalten wird, der oder die dieser Warn-Nachricht zugeordnete(n) mit dem wässrigen Systems befüllte(n) und gegebenenfalls verschlossene(n) Gebindegrundkörper (1) während oder nach der Produktion dem Produktionsprozess entzogen werden.

9. Verfahren nach einem der vorangehenden Ansprüche, **dadurch gekennzeichnet, dass**
die Normalisierung der empfangenen Zustandsinformationen auf der Netzwerk-Bridge (12) eine Zuweisung eines Zeitstempels zu einer oder mehrerer Zustandsinformationen und eine Zuweisung der ein oder mehreren Zustandsinformationen zu einer oder mehreren Zustandserfassungseinheiten (11), die jeweils die ein oder mehreren Zustandsinformationen generiert haben, umfasst.

10. Verfahren nach einem der vorangehenden Ansprüche, **dadurch gekennzeichnet, dass**
der Zeitstempel denjenigen Zeitpunkt wiedergibt, zu dem die jeweilige Zustandsinformation zu der Netzwerk-Bridge (12) versandt wurde.

11. Verfahren nach einem der vorangehenden Ansprüche, **dadurch gekennzeichnet, dass** der Zeitpunkt der Erstellung der Warn-Nachricht abgeglichen wird mit einem Modus, in dem sich die Produktionsanlage (100) befindet.

12. Verfahren nach einem der vorangehenden Ansprüche, **dadurch gekennzeichnet, dass**
eine Nachricht zur Überprüfung der Funktionsfähigkeit einer Zustandserfassungseinheit (11) an die Empfänger-Einheit übermittelt wird wenn mehrere von dieser Zustandserfassungseinheit (11) übermitteilte aufeinanderfolgende Zustandsinformationen identisch sind oder wenn diese Zustandserfassungseinheit (11) über einen vorgegebenen Zeitraum keine Zustandsinformationen zur Verfügung stellt oder wenn eine weitere Zustandserfassungseinheit (11), die ausgelegt und eingerichtet ist, parallel die gleiche Funktion auszuüben wie die erstgenannte Zustandserfassungseinheit (11), von dieser abweichende Zustandsinformationen liefert oder wenn die von dieser Zustandserfassungseinheit (11) online ermittelten Zustandsinformationen von offline ermittelten Zustandsinformationen abweichen.

13. Verfahren nach einem der vorangehenden Ansprüche, **dadurch gekennzeichnet, dass**
die bei einer Netzwerk-Bridge (12) eingegangenen Zustandsinformationen und auf dieser Netzwerk-Bridge (12) mit weiteren Informationen angereicherten Zustandsinformationen an eine Speichereinheit weitergeleitet werden.

14. Verfahren nach Anspruch 13, **dadurch gekennzeichnet, dass** die an die Speichereinheit weitergeleiteten Zustandsinformationen, welche auf der Speichereinheit gespeichert sind, auf der Netzwerk-Bridge (12) gelöscht werden.

15. Verfahren nach einem der vorangehenden Ansprüche, **dadurch gekennzeichnet, dass**
die Zustandserfassungseinheit (11) ausgewählt ist aus einer Gruppe bestehend aus CO2-Sensoren, Temperatursensoren, Leitfähigkeitssensoren, pH-Sensoren, Drucksensoren, Brix-Sensoren, Refraktometern, Vorrichtungen zur Bestimmung der Durchflussrate, Wägeeinheiten, Füllstandshöhenbestimmungsvorrichtungen, Videoüberwachungsvorrichtungen, Filtervorrichtungen, IR-Spektrometern und Massenspektrometern.

16. Verfahren nach Anspruch 15, **dadurch gekennzeichnet, dass**
die Wägeeinheiten eine erste Wägeeinheit, ausgelegt und eingerichtet zur Bestimmung des Gewichts eines oder einer Vielzahl an unverschlossenen, keinen Gebindeverschluss aufweisenden befüllten Gebindegrundkörpern (1) stromabwärts zur Abfüllvorrichtung, und/oder
eine zweite Wägeeinheit, ausgelegt und eingerichtet zur Bestimmung des Gewichts eines oder einer Vielzahl an mit dem Gebindeverschluss in der Verschlussvorrichtung (7) verschlossenen befüllten Gebindegrundkörpern (1), und/oder
eine dritte Wägeeinheit, ausgelegt und eingerichtet zur Bestimmung des Gewichts einer Vielzahl an verschlossenen befüllten Gebindegrundkörpern (1) stromabwärts zur Verpackungseinheit, umfasst.

17. Verfahren nach Anspruch 15 oder 16, **dadurch gekennzeichnet, dass** Leitfähigkeitssensoren in, an und/oder stromabwärts zu der Mischvorrichtung (3), mindestens eine Zuleitung zu der Mischvorrichtung (3), in, an und/oder stromaufwärts zu der der Abfüllvorrichtung (6) und/oder in und/oder an der Transferleitung (5) für den Transfer eines wässrigen Systems von der Mischvorrichtung (3) zu der Abfüllvorrichtung (6) vorliegen.

18. Verfahren nach einem der vorangehenden Ansprüche, **dadurch gekennzeichnet, dass**
die für einen Gebindegrundkörper (1) oder für eine Abfolge von Gebindegrundkörpern (1) und/oder für das wässrige System eines Gebindegrundkörpers (1) oder einer Abfolge von Gebindegrundkörpern (1) im Produktionsverlauf erfassten Zustandsdaten der mit einer Codiereinheit auf den Gebindegrundkörpern (1) und/oder den zugehörigen Gebindeverschluss aufgetragenen Codierung zuordnet werden.

19. Verfahren nach einem der vorangehenden Ansprüche, **dadurch gekennzeichnet, dass**
Zustandsinformationen, die über andere als die Vielzahl an Zustandserfassungseinheit (11), die jeweils entlang des Produktionsverlauf: (2) angeordnet sind, erfasst wurden, den für ein wässriges System und/oder den hiermit befüllten Gebindegrundkörpern (1) mit der Vielzahl an Zustandserfassungseinheiten (11) ermittelten und erfassten Zustandsinformationen auf der Netzwerk-Bridge (12) zugeordnet werden.

20. Verfahren nach einem der vorangehenden Ansprüche, **dadurch gekennzeichnet, dass**
eine Vielzahl an Zustandserfassungseinheiten (11), die jeweils entlang des Produktionsverlaufs (2) angeordnet sind, ausgelegt und eingerichtet dazu, bis zu 200 Zustandsinformationen pro Sekunde der zugehörigen Netzwerk-Bridge (12) zur Verfügung zu stellen.

21. Verfahren nach einem der vorangehenden Ansprüche, **dadurch gekennzeichnet, dass**
die Netzwerk-Bridge (12) eingerichtet und ausgelegt ist, in aufeinanderfolgenden Intervallen von 5 bis 60 Sekunden die erhaltenen Zustandsinformationen mit den Soll-Bereichswerten und/oder Soll-Vorgaben abzugleichen und gegebenenfalls eine Warn-Nachricht an die Empfängereinheit zu übermitteln oder eine Warn-Nachricht zur Verfügung zu stellen.

22. Verfahren nach einem der vorangehenden Ansprüche, **dadurch gekennzeichnet, dass**
die Netzwerk-Bridge (12) eingerichtet und ausgelegt ist, die, im Zusammenhang mit einer Abweichung von Zustandsinformationen von Soll-Bereichswerten und/oder Soll-Vorgaben generierte, Warn-Nachricht um Handlungsanweisungen an die Empfängereinheit zu ergänzen.

23. Verfahren nach einem der vorangehenden Ansprüche, **dadurch gekennzeichnet, dass**
das Empfangen von Zustandsinformationen an der Netzwerk-Bridge (12) von der Vielzahl an Zustandserfassungseinheiten (11) unter Zuhilfenahme eines Netzwerkprotokolls stattfindet.

24. Produktionsanlage (100), umfassend
eine Netzwerk-Bridge (12) umfassend ein oder mehrere Prozessoren, die ausgelegt und eingerichtet sind, individuell oder kollektiv das Verfahren gemäß der Ansprüche 1 bis 23 durchzuführen;
die ein oder mehreren Zustandserfassungseinheiten (11);
die Netzwerk-Bridge (12) in Kommunikationsverbindung mit den ein oder mehreren Zustandserfassungseinheiten (11); und
die Empfangseinheit (14) in Kommunikationsverbindung mit der Netzwerk-Bridge (12).

25. Computerprogramm mit Computerprogrammelementen, die bewirken, dass eine Netzwerk-Bridge (12) der Produktionsanlage (100) nach Anspruch 24 zur Implementierung des Verfahrens nach einem der Ansprüche 1 bis 23 in Betrieb ist.

26. Computerlesbares Speichermedium, das computerausführbare Befehle des Computerprogramms nach Anspruch 25 speichert.

27. Verwendung des Verfahrens nach einem der Ansprüche 1 bis 23 oder des Computerprogramms nach Anspruch 25 oder des computerlesbaren Speichermediums nach Anspruch 26 zur quasi-kontinuierlichen Überwachung der der Herstellung einer Vielzahl an mit einem wässrigen System befüllten Gebinden auf einer auf Aggregaten basierenden Produktionsanlage (100) entlang des Produktionsverlaufs (2) auf Spezifikationskonformität.

28. Verwendung nach Anspruch 27 **dadurch gekennzeichnet, dass**
mindestens zwei unterschiedliche wässrige Systeme zeitgleich aufeinander folgend auf der Produktionsanlage (100) verarbeitet werden.

29. Verwendung des Verfahrens nach einem der Ansprüche 1 bis 23 oder des Computerprogramms nach Anspruch 25 oder des computerlesbaren Speichermediums nach Anspruch 26 zur Freigabe und/oder Sperrung eines auf einer Produktionsanlage (100) mit einem wässrigen System befüllten und verschlossenen Gebindegrundkörpers (1) oder einer Abfolge von solchen Gebindegrundkörpern (1)

30. Verwendung des Verfahrens nach einem der Ansprüche 27 bis 29 oder des Computerprogramms nach Anspruch 25, soweit auf ein Verfahren nach einem der Ansprüche 1 bis 23 rückbezogen, oder des computerlesbaren Speichermediums nach Anspruch 26, soweit auf ein Verfahren nach einem der Ansprüche 1 bis 23 zurückbezogen, zur Kontrolle der Funktionsfähigkeit einer Zustandserfassungseinheit (11).

## Claims

1. A computer-implemented method for quasi-continuous monitoring for specification conformity along a production sequence (2) of the production of a plurality of container base bodies (1) filled with an aqueous system with an aggregate-based high-speed production facility (100), wherein the method comprises the steps of:
- receiving status information at a network bridge (12) from a plurality of status acquisition units (11), which are in each case arranged along the production sequence (2), these each being adapted and arranged for online acquisition in intervals of the status information,
- normalizing the received status information on the network bridge (12),
- comparing the status information on the network bridge (12) with specification-compliant target range values and/or target setpoints stored on the network bridge (12), and
- providing a warning message to a receiver unit (14) if an item of status information or number of items of status information lie(s) outside the target range values and/or target setpoints,
wherein the high-speed production facility (100) to be monitored fills in the range of 10 to 50 container base bodies (1) with the aqueous system,
wherein in the network bridge (12) not only the time stamp but also information relating to the aqueous system the used container base bodies (1) the container coding and/or packaging are assigned to the status information provided by the status acquisition units (11).

2. The method according to Claim 1, wherein the production facility (100) comprises:
a mixing apparatus (3),
at least one inflow line to the mixing apparatus (3),
a filling apparatus (6),
a transfer line (5) for the transfer of an aqueous system from the mixing apparatus (3) to the filling apparatus (6),
a closing apparatus (7),
an apparatus adapted and arranged to deliver up the unfilled container base bodies (1),
an apparatus (8), adapted and arranged to deliver up container closures,
and the one or more status acquisition units (11).

3. The method according to Claims 1 or 2, further comprising
assignment of the warning message to an optionally closed container base body (1) or a sequence of optionally closed container base bodies (1) filled with the aqueous system.

4. The method according to Claims 1 to 3, **characterized in that**
the high-speed production facility (11) to be monitored fills in the range of 20 to 40 container base bodies (1), preferably beverage can base bodies, per second with the aqueous system.

5. The method according to Claims 1 to 4, **characterized in that**
the status information acquired by the status acquisition units (11) is made available in intervals which extend over a period of 1 sec to 120 sec to the allocated network bridge (12).

6. The method according to any one of the preceding claims, **characterized in that**, as soon as a warning message is created because a target range value and/or a target setpoint is not complied with, a maintenance order is generated.

7. The method according to any one of the preceding claims, **characterized in that**, before or after the packaging unit a clearance mode is allocated to an optionally closed container base body (1) or a sequence of optionally closed container base bodies (1) filled with the aqueous system if no warning message is allocated thereto.

8. The method according to any one of the preceding claims, **characterized in that**, as soon as a warning message is created because a target range value and/or a target setpoint is not complied with, the optionally closed container base body (1) or container base bodies (1) filled with the aqueous system and assigned to this warning message are removed from the production process during or after production.

9. The method according to any one of the preceding claims, **characterized in that**, normalization of the received status information on the network bridge (12) comprises allocation of a time stamp to one or more items of status information and allocation of the one or more items of status information to one or more status acquisition units (11), which have in each case generated the one or more items of status information.

10. The method according to any one of the preceding claims, **characterized in that**, the time stamp reproduces that point in time at which the respective status information was dispatched to the network bridge (12).

11. The method according to any one of the preceding claims, **characterized in that**, the point in time at which the warning message is generated is compared with a mode in which the production facility (100) is in.

12. The method according to any one of the preceding claims, **characterized in that**, a message relating to checking the functionality of a status acquisition unit (11) is transmitted to the receiver unit if multiple successive items of status information transmitted by this status acquisition unit (11) are identical or if this status acquisition unit (11) does not provide any status information over a predetermined period of time, or if a further status acquisition unit (11), which is adapted and arranged to exercise the same function in parallel as the first-mentioned status acquisition unit (11), supplies status information which deviates therefrom or if the status information acquired online by this status acquisition unit (11) deviates from status information acquired offline.

13. The method according to any one of the preceding claims, **characterized in that**, the status information input at a network bridge (12) and status information augmented with further information on this network bridge (12) are forwarded to a memory unit.

14. The method according to Claim 13, **characterized in that** the status information forwarded to the memory unit and which is stored on the memory unit is deleted on the network bridge (12).

15. The method according to any one of the preceding claims, **characterized in that**, the status acquisition unit (11) is selected from the group consisting of CO2 sensors, temperature sensors, conductivity sensors, pH sensors, pressure sensors, Brix sensors, refractometers, apparatuses for determining flow rate, weighing units, filling level determination device video monitoring apparatuses, filter apparatuses, IR spectrometers, and mass spectrometers.

16. The method according to Claim 15, **characterized in that**
the weighing units comprise a first weighing unit, adapted and arranged to determine the weight of one or a plurality of filled, unclosed container base bodies (1) without any container closure downstream of the filling apparatus, and/or
a second weighing unit, adapted and arranged to determine the weight of one or a plurality of filled container base bodies (1) closed in the closing apparatus (7), and/or
a third weighing unit, adapted and arranged to determine the weight of a plurality of closed, filled container base bodies (1) downstream of the packaging unit.

17. The method according to Claim 15 or 16, **characterized in that**
conductivity sensors are present in, at and/or downstream of the mixing apparatus (3), and
at least one feeding line to the mixing apparatus (3),
is present in, at and/or upstream of the filling apparatus (6) and/or in and/or at the transfer line (5) for the transfer of an aqueous system from the mixing apparatus (3) to the filling apparatus (6).

18. The method according to any one of the preceding claims, **characterized in that**,
the status data acquired on the production line for a container base body (1) or for a sequence of container base bodies (1) and/or
for the aqueous system of a container base body (1) or a sequence of container base bodies (1) are assigned to the coding applied with a coding unit to the container base bodies (1) and/or
the associated container closure.

19. The method according to any one of the preceding claims, **characterized in that**, status information which have been acquired via units other than the plurality of status acquisition units (11) arranged in each case along the production sequence (2), is assigned on the network bridge (12), to the status information acquired and detected with the plurality of status acquisition units (11) for an aqueous system and/or the container base bodies (1) filled therewith.

20. The method according to any one of the preceding claims, **characterized in that**, a plurality of status acquisition units (11), which are arranged in each case along the production sequence, are adapted and arranged to make available up to 200 items of status information per second to the associated network bridge (12).

21. The method according to any one of the preceding claims, **characterized in that**, the network bridge (12) is arranged and adapted to compare the obtained status information with the target range values and/or target setpoints at successive intervals of 5 to 60 seconds and optionally provide a warning message to the receiver unit or make available a warning message.

22. The method according to any one of the preceding claims, **characterized in that**, the network bridge (12) is arranged and adapted to supplement the warning message generated in relation to a deviation of status information from the target range values and/or target setpoints with instructions for action for the receiver unit.

23. The method according to any one of the preceding claims, **characterized in that**, the receiving of status information at the network bridge (12) takes place by the plurality of status acquisition units (11) with the assistance of a network protocol.

24. A production facility, comprising
- a network bridge comprising one or more processors, which are adapted and arranged to carry out individually or collectively the method according to Claims 1 to 23;
- the one or more status acquisition units (11);
- the network bridge (12) in communication with the one or more status acquisition units (11); and
- the receiver unit (14) in communication with the network bridge (12).

25. A computer program with computer program elements, which cause a network bridge (12) of the production facility according to Claim 24 to be in operation for implementing the method according to any one of Claims 1 to 23.

26. A computer-readable storage medium, which stores computer-executable commands of the computer program according to Claim 25.

27. Use of the method according to any one of Claims 1 to 23 or of the computer program according to Claim 25 or of the computer-readable storage medium according to Claim 26 for quasi-continuous monitoring for specification conformity along the production line for the production of a plurality of containers filled with an aqueous system with an aggregate-based production facility (100).

28. Use according to Claim 27, **characterized in that**
at least two different aqueous systems are simultaneously processed on separate sections of the production facility (100) following each other.

29. Use of the method according to any one of Claims 1 to 23 or of the computer program according to Claim 25 or of the computer-readable storage medium according to Claim 26 for clearance and/or blockage of a closed beverage can base body (1) filled with an aqueous system or a sequence of such beverage can base bodies (1), on a production facility (100).

30. Use of the method according to any one of Claims 27 to 29 or of the computer program according to Claim 25, insofar as reference is made back to a method according to any one of Claims 1 to 23, or of the computer-readable storage medium according to Claim 26, insofar as reference is made back to a method according to any one of Claims 1 to 23, for monitoring the functionality of a status acquisition unit (11).

## Revendications

1. Procédé mis en oeuvre par ordinateur pour la surveillance quasi-continue de la fabrication d'une pluralité de corps de base de récipient (1) remplis d'un système aqueux sur une installation de production à grande vitesse (100) à base d'agrégats le long d'une ligne de production (2) pour la conformité aux spécifications, le procédé comprenant les étapes suivantes :
- la réception d'informations d'état au niveau d'un pont de réseau (12) à partir d'une pluralité d'unités de détection d'état (11), qui sont chacune disposées le long de la ligne de production, chacune étant conçue et équipée pour la détection en ligne par intervalles des informations d'état,
- la normalisation des informations d'état reçues sur le pont de réseau (12),
- la comparaison des informations d'état sur le pont de réseau (12) à des valeurs de plage de consigne conformes aux spécifications et/ou des prescriptions de consigne enregistrées sur le pont de réseau (12), et
- la mise à disposition d'un message d'avertissement à une unité de réception (14) lorsqu'une information d'état ou plusieurs informations d'état se situent en dehors des valeurs de plage de consigne et/ou des prescriptions de consigne,
l'installation de production à grande vitesse (100) à surveiller remplissant avec le système aqueux dans la plage de 10 à 50 corps de base de récipient (1) par seconde, dans le pont de réseau (12), l'information d'état mise à disposition par l'unité de détection d'état (11) étant associée, outre à l'horodatage, également à des informations concernant le système aqueux, les corps de base de récipient (1) utilisés, le codage de récipient et/ou l'emballage.

2. Procédé selon la revendication 1, l'installation de production (100) comprenant :
un dispositif de mélange (3),
au moins une conduite d'alimentation vers le dispositif de mélange (3),
un dispositif de remplissage (6),
une conduite de transfert (5) pour le transfert d'un système aqueux depuis le dispositif de mélange (3) vers le dispositif de remplissage (6),
un dispositif de fermeture (7),
un dispositif, agencé et conçu pour la livraison des corps de base de récipient (1) non remplis,
un dispositif (8), conçu et équipé pour la livraison de fermetures de récipient,
ainsi que les une ou plusieurs unités de détection d'état (11).

3. Procédé selon les revendications 1 ou 2, comprenant en outre l'association du message d'avertissement à une ou une succession de corps de base de récipient (1) remplis avec le système aqueux et éventuellement fermés.

4. Procédé selon les revendications 1 à 3, **caractérisé en ce que** l'installation de production à grande vitesse (100) à surveiller remplit avec le système aqueux dans la plage de 20 à 40 corps de base de récipient (1), de préférence corps de base de boîtes de boisson, par seconde.

5. Procédé selon les revendications 1 à 4, **caractérisé en ce que** à des intervalles qui s'étendent sur une période de 1 seconde à 120 secondes, les informations d'état détectées par les unités de détection d'état (11) sont mises à la disposition du pont de réseau (12) attribué.

6. Procédé selon l'une quelconque des revendications précédentes, **caractérisé en ce que**
dès qu'un message d'avertissement indique qu'une valeur de plage de consigne et/ou une prescription de consigne n'est pas respectée, un ordre de maintenance est généré.

7. Procédé selon l'une quelconque des revendications précédentes, **caractérisé en ce que**
un mode de libération est attribué à une ou une succession de corps de base de récipient (1) remplis avec le système aqueux et éventuellement fermés, avant ou après l'unité d'emballage lorsqu'aucun message d'avertissement n'a été attribué à celui-ci ou ceux-ci.

8. Procédé selon l'une quelconque des revendications précédentes, **caractérisé en ce que**
dès qu'un message d'avertissement indique qu'une valeur de plage de consigne et/ou une prescription de consigne n'est pas respectée, le ou les corps de base de récipient (1) associés à ce message d'avertissement, remplis avec le système aqueux et éventuellement fermés, sont retirés du processus de production pendant ou après la production.

9. Procédé selon l'une quelconque des revendications précédentes, **caractérisé en ce que**
la normalisation des informations d'état reçues sur le pont de réseau (12) comprend une attribution d'un horodatage à une ou plusieurs informations d'état et une attribution des une ou plusieurs informations d'état à une ou plusieurs unités de détection d'état (11) qui ont respectivement généré les une ou plusieurs informations d'état.

10. Procédé selon l'une quelconque des revendications précédentes, **caractérisé en ce que**
l'horodatage indique le moment auquel les informations d'état respectives ont été envoyées au pont de réseau (12).

11. Procédé selon l'une quelconque des revendications précédentes, **caractérisé en ce que**
le moment de création du message d'avertissement est comparé à un mode dans lequel se trouve l'installation de production (100).

12. Procédé selon l'une quelconque des revendications précédentes, **caractérisé en ce que**
un message de vérification du bon fonctionnement d'une unité de détection d'état (11) est transmis à l'unité de réception lorsque plusieurs informations d'état successives transmises par cette unité de détection d'état (11) sont identiques ou lorsque cette unité de détection d'état (11) ne met à disposition aucune information d'état pendant une période de temps prédéterminée ou lorsqu'une autre unité de détection d'état (11), qui est conçue et équipée pour exercer parallèlement la même fonction que l'unité de détection d'état (11) mentionnée en premier lieu, fournit des informations d'état différentes de celles-ci ou lorsque les informations d'état déterminées en ligne par cette unité de détection d'état (11) dévient d'informations d'état déterminées hors ligne.

13. Procédé selon l'une quelconque des revendications précédentes, **caractérisé en ce que**
les informations d'état reçues par un pont de réseau (12) et les informations d'état enrichies d'autres informations sur ce pont de réseau (12) sont transmises à une unité de stockage.

14. Procédé selon la revendication 13, **caractérisé en ce que**
les informations d'état transmises à l'unité de stockage, qui sont stockées sur l'unité de stockage, sont effacées sur le pont de réseau (12).

15. Procédé selon l'une quelconque des revendications précédentes, **caractérisé en ce que**
l'unité de détection d'état (11) est sélectionnée parmi le groupe se composant de : les capteurs de CO2, les capteurs de température, les capteurs de conductivité, les capteurs de pH, les capteurs de pression, les capteurs de Brix, les réfractomètres, les dispositifs de détermination de débit, les unités de pesage, les dispositifs de détermination de hauteur de niveau de remplissage, les dispositifs de surveillance vidéo, les dispositifs de filtration, les spectromètres IR et les spectromètres de masse.

16. Procédé selon la revendication 15, **caractérisé en ce que**
les unités de pesage comprennent une première unité de pesage, conçue et équipée pour déterminer le poids d'un ou d'une pluralité de corps de base de récipient (1) remplis, non fermés, ne présentant pas de fermeture de récipient, en aval du dispositif de remplissage, et/ou
une deuxième unité de pesage, conçue et équipée pour déterminer le poids d'un ou d'une pluralité de corps de base de récipient (1) remplis fermés par la fermeture de récipient dans le dispositif de fermeture (7), et/ou
une troisième unité de pesage, conçue et équipée pour déterminer le poids d'une pluralité de corps de base de récipient (1) remplis fermés en aval de l'unité d'emballage.

17. Procédé selon la revendication 15 ou 16, **caractérisé en ce que**
des capteurs de conductivité dans, sur et/ou en aval du dispositif de mélange (3), au moins une conduite d'alimentation vers le dispositif de mélange (3), dans, sur et/ou en amont de celle du dispositif de remplissage (6) et/ou dans et/ou sur la conduite de transfert (5) pour le transfert d'un système aqueux du dispositif de mélange (3) vers le dispositif de remplissage (6) sont présents.

18. Procédé selon l'une quelconque des revendications précédentes, **caractérisé en ce que**
les données d'état détectées pour un corps de base de récipient (1) ou pour une succession de corps de base de récipient (1) et/ou pour le système aqueux d'un corps de base de récipient (1) ou d'une succession de corps de base de récipient (1) dans la ligne de production sont associées au codage appliqué par une unité de codage sur les corps de base de récipient (1) et/ou la fermeture de récipient correspondante.

19. Procédé selon l'une quelconque des revendications précédentes, **caractérisé en ce que**
des informations d'état qui ont été détectées par l'intermédiaire d'autres que la pluralité d'unités de détection d'état (11), qui sont chacune disposées le long de la ligne de production (2), sont associées aux informations d'état déterminées et détectées sur le pont de réseau (12) pour un système aqueux et/ou les corps de base de récipient (1) remplis avec celui-ci avec la pluralité d'unités de détection d'état (11).

20. Procédé selon l'une quelconque des revendications précédentes, **caractérisé en ce que**
une pluralité d'unités de détection d'état (11), qui sont chacune disposées le long de la ligne de production (2), est conçue et équipée pour mettre à disposition jusqu'à 200 informations d'état par seconde au pont de réseau associé (12).

21. Procédé selon l'une quelconque des revendications précédentes, **caractérisé en ce que**
le pont de réseau (12) est agencé et conçu pour comparer, à des intervalles successifs de 5 à 60 secondes, les informations d'état reçues aux valeurs de plage de consigne et/ou aux prescriptions de consigne et éventuellement pour transmettre un message d'avertissement à l'unité de réception ou pour mettre à disposition un message d'avertissement.

22. Procédé selon l'une quelconque des revendications précédentes, **caractérisé en ce que**
le pont de réseau (12) est agencé et conçu pour compléter le message d'avertissement généré en relation avec une déviation d'informations d'état par rapport à des valeurs de plage de consigne et/ou des prescriptions de consigne par des instructions d'action à l'unité de réception.

23. Procédé selon l'une quelconque des revendications précédentes, **caractérisé en ce que**
la réception d'informations d'état au niveau du pont de réseau (12) à partir de la pluralité d'unités de détection d'état (11) est effectuée à l'aide d'un protocole de réseau.

24. Installation de production (100) comprenant
un pont de réseau (12) comprenant un ou plusieurs processeurs qui sont conçus et équipées pour exécuter individuellement ou collectivement le procédé selon les revendications 1 à 23 ;
les une ou plusieurs unités de détection d'état (11) ;
le pont de réseau (12) en communication avec les une ou plusieurs unités de détection d'état (11) ; et
l'unité de réception (14) en liaison de communication avec le pont de réseau (12).

25. Programme informatique avec des éléments de programme informatique qui font qu'un pont de réseau (12) de l'installation de production (100) selon la revendication 24 est opérationnel pour l'implémentation du procédé selon l'une quelconque des revendications 1 à 23.

26. Support de stockage lisible par ordinateur qui stocke des instructions exécutables par ordinateur du programme informatique selon la revendication 25.

27. Utilisation du procédé selon l'une quelconque des revendications 1 à 23 ou du programme informatique selon la revendication 25 ou du support de stockage lisible par ordinateur selon la revendication 26 pour la surveillance quasi-continue de la fabrication d'une pluralité de récipients remplis d'un système aqueux sur une installation de production (100) à base d'agrégats le long de la ligne de production (2) pour la conformité aux spécifications.

28. Utilisation selon la revendication 27, **caractérisée en ce que** au moins deux systèmes aqueux différents sont traités simultanément successivement sur l'installation de production (100).

29. Utilisation du procédé selon l'une quelconque des revendications 1 à 23 ou du programme informatique selon la revendication 25 ou du support de stockage lisible par ordinateur selon la revendication 26 pour la libération et/ou le blocage d'un corps de base de récipient (1) ou d'une succession de tels corps de base de récipient (1) remplis avec un système aqueux et fermés sur une installation de production (100).

30. Utilisation du procédé selon l'une quelconque des revendications 27 à 29 ou du programme informatique selon la revendication 25, dans la mesure elle se rapporte à un procédé selon l'une quelconque des revendications 1 à 23, ou du support de stockage lisible par ordinateur selon la revendication 26, dans la mesure où elle se rapporte à un procédé selon l'une quelconque des revendications 1 à 23, pour contrôler le bon fonctionnement d'une unité de détection d'état (11).
